# EUROPEAN PATENT SPECIFICATION

(11) **EP 2 696 675 B1**
(45) Date of publication and mention of the grant of the patent: **08.06.2016**
(21) Application number: 12771537.3
(22) Date of filing: 05.04.2012
(51) Int. Cl.: A01M 1/04, A01M 1/14, A01M 1/10, A01M 1/12

(54) **METHOD AND APPARATUS FOR PEST CONTROL**
SCHÄDLINGSBEKÄMPFUNGSVERFAHREN UND -VORRICHTUNG
PROCÉDÉ ET APPAREIL DE LUTTE CONTRE LES NUISIBLES

(30) Priority: 12.04.2011 FI 20115346
(43) Date of publication of application: 19.02.2014
(73) Proprietor: Novarbo Oy, 27511 Eura (FI)
(72) Inventor: HAUKIOJA, Markku, 27450 Harola (FI); JALAVA, Anssi, 27670 Mannila (FI); SAINIO, Jarmo, 23800 Laitila (FI); HUTTUNEN, Jukka, 26910 Unaja (FI)
(74) Representative: LEITZINGER OY
(86) International application number: PCT/FI2012/050352
(87) International publication number: WO 2012/140320

(56) References cited:
- WO-A1-02/098218
- WO-A1-2007/101914
- WO-A1-2011/006239
- WO-A1-2011/006239
- CN-Y- 201 294 814
- JP-A- 10 117 658
- JP-A- H10 117 658
- JP-A- 2009 022 190
- JP-A- 2010 124 705
- US-A- 3 653 145
- US-A- 4 086 720
- US-A- 5 311 697
- US-A1- 2007 175 093

## Description

### FIELD OF THE INVENTION

This invention relates to a method and an apparatus for pest control. The method and the apparatus are particularly well suited for controlling small flying pest insects in greenhouses and other cultivated areas. The method and apparatus of the invention can also be used in warehouses, for indoor plants on public premises, and restrictedly also in outdoor cultivated areas.

### DESCRIPTION OF THE PRIOR ART

Modern greenhouse production aims in many ways at reducing the need to use pesticides. In addition to biological control methods, various mechanical control methods are also used. Known are, for example, yellow traps which lure pests with yellow colour to surfaces treated with glue or to containers containing liquid. Also known are traps based on scents which lure pests, such as so-called pheromone traps.

The problem with currently used traps is that the coloured surfaces become soiled and have weak attractiveness. Due to the weak attractiveness, numerous traps are needed in large cultivated areas.

Large numbers of e.g. glue traps reduce the amount of light received by the growth and hinder working in the greenhouse. The surfaces of the glue traps also dry relatively fast in greenhouse conditions, whereupon the sticking of the pests on the surfaces of the traps deteriorates. The soiling of the glue traps reduces the attractiveness of the coloured surfaces. The effective use of glue traps requires a lot of maintenance, which for its part also limits their usage.

One of the limiting factors for the usage of glue traps is that different colours lure different pests. For example, blue traps are used for thrips, whereas e.g. greenhouse whiteflies are attracted by yellow colour.

When using container traps, it is usually not possible to have very large areas of coloured surfaces, whereupon the effectiveness of the traps remains weak.

The closest prior art WO2007101914 discloses a method wherein a droplet curtain system with large surface is used as a liquid jet for drying and cooling greenhouse air. This document does not, however, disclose or suggest directing coloured light at the liquid jet or adding colouring and/or luminescent agent to the liquid jet to lure pests.
Patent document WO2011006239A1 discloses an insect trap in which a fluid film flows down the translucent wall and intercepts insects attracted by the emitted light.
Also document JP10117658A discloses an insect capturing device which comprises forming of a falling film of an insect capturing liquid having ultraviolet transitivity at the position where light from the light source is irradiated.
WO02098218A1 discloses a cylindrical trap in which insects attracted to the light are entrained by the water pumped from within the body of the trap and which create a flow of liquid over the upper surface of the trap. Documents US2007175093A1 and US3653145A disclose that colours blue and yellow are known to attract flying insects. US3653145A discloses also a method to attract flies on a strip which contains fly poison as well as a use of a luminescent or fluorescent material or the ultraviolet light as attractive for the flying insects.
None of the above documents discloses or suggest an insect trap suitable for use in combination with a droplet curtain system with large surface used for drying and cooling greenhouse air.

### Description of the invention

This application describes an invention by means of the method and an apparatus of which pests commonly found in cultivated areas can be controlled substantially more efficiently and more economically than with current technology.

The method of the invention is characterised by what is disclosed in the characterising part of claim 1. The apparatus of the invention is characterised by what is disclosed in the characterising part of claim 8.

The essential feature of the method and apparatus according to the invention is that, in the method, pests are lured with light or other radiation attractive to pests which is directed at a liquid jet. The pests fly into the jet and are carried by it into the liquid stream and to the filters connected to the apparatus, from which they can be washed away.

Different colouring agents may be added to the liquid jet to reflect the desired colour from the jet. Also a luminescent agent, such as a fluorescent or phosphorescent agent or other photoluminescent agent, may be added to the liquid jet in addition to or instead of the colouring agents.

Scents which lure pests, such as the scent of fruit, fermentation products of sugar or pheromones may also be added to the liquid jets, as well as surfactants or pesticides enhancing pest control, to ensure that the pest insects are destroyed in the liquid jet.

Advantages of the method according to the invention are:
The intensity of the colour or other radiation which lures the pests can be made much stronger by using appropriate equipment than by using the current coloured surfaces.

The colour which lures the pests can readily be changed by changing the wavelength of the radiation directed at the liquid jet.

The luring colour may also be ultraviolet light invisible to the human eye.

With the method and the apparatus according to the invention, large surfaces reflecting visible coloured light or other radiation, which attracts pests effectively, can be provided relatively inexpensively.

The effectiveness of the control method according to the invention improves in the dark, whereas the effectiveness of mere coloured surfaces is lost in the dark.

The need for maintenance of the apparatus according to the invention is low compared with current methods.

The method and the apparatus according to the invention can be connected with little expense to droplet curtain systems used for drying and cooling greenhouse air, such as the system described in the application WO 2007/101914 A1.

The invention is described in greater detail in the following, with reference to the accompanying drawings, wherein:
- Figure 1: shows a front view of an apparatus according to the invention, and
- Figure 2: shows a rear view of the apparatus according to Fig. 1.

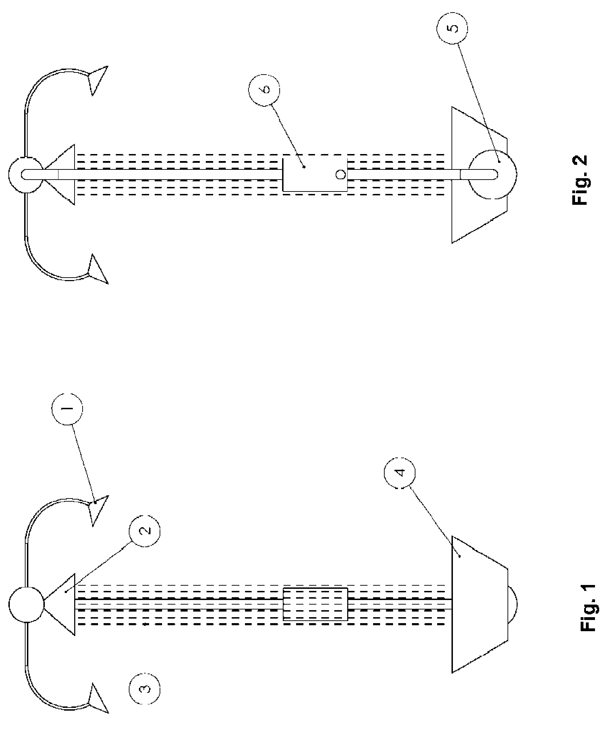

A preferred embodiment of the apparatus according to the present invention is illustrated in Figures 1 and 2. The apparatus according to the example is intended to be used for controlling flying pests, such as whiteflies and thrips, found in greenhouses. The apparatus comprises lights 1, by means of which the drop jet is illuminated with a light of desired colour, e.g. yellow or blue, a nozzle 2 for forming the droplet curtain 3, a collector tray 4 for recovering the drop jet, a pump 5 for circulating the liquid from the collector tray to the jet nozzle, and a filter 6 for filtering impurities from the circulated liquid.

## Claims

1. A method for controlling pests with a liquid jet (3), **characterised in that** a droplet curtain system with large surface used for drying and cooling greenhouse air is used as a liquid jet (3) in the method, which liquid jet is arranged to reflect and/or radiate radiation which lures pests in its surroundings by directing coloured light or other radiation at it, or by adding colouring agent and/or a luminescent agent to the liquid used in the jet.

2. A method as claimed in claim 1, **characterised in that** at least one of the lights directed at the liquid jet (3) is yellow.

3. A method as claimed in claim 1, **characterised in that** at least one of the lights directed at the liquid jet (3) is blue.

4. A method as claimed in claim 1, **characterised in that** at least one of the lights directed at the liquid jet (3) is invisible to the human eye, such as ultraviolet light.

5. A method as claimed in claim 1, **characterised in that** at least a part of the colouring agent added to the liquid jet (3) is yellow.

6. A method as claimed in claim 1, **characterised in that** the luminescent agent is a fluorescent agent or a phosphorescent agent.

7. A method as claimed in any of the claims 1 to 6, **characterised in that** a scent which lures pests is also added to the liquid jet (3).

8. An apparatus for controlling pests in a greenhouse, which apparatus is arranged to provide a droplet curtain with large surface forming a liquid jet (3) as light reflecting and/or radiating means to lure pests and which droplet curtain acts at the same time as a means for drying and cooling greenhouse air, **characterised in that** the apparatus comprises means for directing coloured light or other radiation at the liquid jet.

## Patentansprüche

1. Schädlingsbekämpfungsverfahren mit einem Flüssigkeitsstrahl (3), **dadurch gekennzeichnet, dass** ein Tröpfchenvorhangsystem mit einer großen Oberfläche, wie es zum Trocknen und Kühlen von Gewächshausluft verwendet wird, als Flüssigkeitsstrahl (3) in dem Verfahren verwendet wird, wobei der Flüssigkeitsstrahl ausgebildet ist, Strahlung, welche Schädlinge in seiner Umgebung anlockt, zu reflektieren und/oder abzustrahlen, indem farbiges Licht oder andere Strahlung auf ihn gerichtet wird oder indem ein Farbmittel und/oder ein Lumineszenzmittel der im Strahl verwendeten Flüssigkeit zugesetzt wird.

2. Verfahren nach Anspruch 1, **dadurch gekennzeichnet, dass** mindestens einer der auf den Flüssigkeitsstrahl (3) gerichteten Lichtanteile gelb ist.

3. Verfahren nach Anspruch 1, **dadurch gekennzeichnet, dass** mindestens einer der auf den Flüssigkeitsstrahl (3) gerichteten Lichtanteile blau ist.

4. Verfahren nach Anspruch 1, **dadurch gekennzeichnet, dass** mindestens einer der auf den Flüssigkeitsstrahl (3) gerichteten Lichtanteile für das menschliche Auge unsichtbar ist, wie z.B. ultraviolettes Licht.

5. Verfahren nach Anspruch 1, **dadurch gekennzeichnet, dass** mindestens ein Teil des dem Flüssigkeitsstrahl (3) zugesetzten Farbmittels gelb ist.

6. Verfahren nach Anspruch 1, **dadurch gekennzeichnet, dass** das Lumineszenzmittel ein Fluoreszenzmittel oder ein Phosphoreszenzmittel ist.

7. Verfahren nach einem der Ansprüche 1 bis 6, **dadurch gekennzeichnet, dass** ein Duft, der Schädlinge anlockt, ebenfalls dem Flüssigkeitsstrahl (3) zugesetzt wird.

8. Schädlingsbekämpfungsvorrichtung in einem Gewächshaus, wobei die Vorrichtung ausgebildet ist, einen Tröpfchenvorhang mit einer großen Oberfläche vorzusehen, wobei ein Flüssigkeitsstrahl (3) als Licht reflektierendes und/oder abstrahlendes Mittel zum Anlocken von Schädlingen gebildet ist, und wobei der Tröpfchenvorhang gleichzeitig als Mittel zum Trocknen und Kühlen der Gewächshausluft wirkt, **dadurch gekennzeichnet, dass** die Vorrichtung Mittel zum Richten von farbigem Licht oder anderer Strahlung auf den Flüssigkeitsstrahl umfasst.

## Revendications

1. Procédé de lutte contre les nuisibles avec un jet de liquide (3), **caractérisé en ce qu'**un système de rideau de gouttelettes avec une grande surface utilisé pour le séchage et le refroidissement de l'air d'une serre est utilisé en tant que jet de liquide (3) dans le procédé, ledit jet de liquide est agencé pour refléter et/ou émettre un rayonnement qui attire les nuisibles dans son environnement en dirigeant une lumière colorée ou un rayonnement sur celui-ci, ou en ajoutant un agent colorant et/ou un agent luminescent au liquide utilisé dans le jet.

2. Procédé selon la revendication 1, **caractérisé en ce qu'**au moins l'une des lumières dirigées sur le jet de liquide (3) est jaune.

3. Procédé selon la revendication 1, **caractérisé en ce qu'**au moins l'une des lumières dirigées sur le jet de liquide (3) est bleue.

4. Procédé selon la revendication 1, **caractérisé en ce qu'**au moins l'une des lumières dirigées sur le jet de liquide (3) et invisible à l'oeil humain, telle qu'une lumière ultraviolette.

5. Procédé selon la revendication 1, **caractérisé en ce qu'**au moins une partie de l'agent colorant ajouté au jet de liquide (3) est jaune.

6. Procédé selon la revendication 1, caractérisé en ce l'agent luminescent est un agent fluorescent ou un agent phosphorescent.

7. Procédé selon l'une quelconque des revendications 1 à 6, **caractérisé en ce qu'**un parfum qui attire les nuisibles est également ajouté au jet de liquide (3).

8. Appareil de lutte contre les nuisibles dans une serre, ledit appareil est agencé pour fournir un rideau de gouttelettes avec une grande surface formant un jet de liquide (3) en tant que moyen de réflexion et/ou d'émission pour attirer les nuisibles et ledit rideau de gouttelettes fait en même temps office de moyen de séchage et de refroidissement de l'air de la serre, **caractérisé en ce que** l'appareil comprend un moyen pour diriger la lumière colorée ou autre radiation sur le jet de liquide.
